# FASCICULE DE BREVET EUROPEEN

(11) **EP 2 274 363 B1**
(45) Date de publication et mention de la délivrance du brevet: **01.08.2018**
(21) Numéro de dépôt: 09746011.7
(22) Date de dépôt: 29.04.2009
(51) Int. Cl.: C08J 3/12, C08J 3/28, C08G 69/04, C08G 69/08, C08G 69/16, C08G 69/26, C08G 69/28, C08G 69/44, B29C 67/04, B29C 67/00, C08J 3/14, B29C 64/153, B29K 77/00

(54) **PROCEDE POUR AUGMENTER L'ECART ENTRE LA TEMPERATURE DE FUSION ET LA TEMPERATURE DE CRISTALLISATION D'UNE POUDRE DE POLYAMIDE**
VERFAHREN ZUR ERHÖHUNG DER DIFFERENZ ZWISCHEN DER SCHMELZTEMPERATUR UND DER KRISTALLISATIONSTEMPERATUR EINES POLYAMIDPULVERS
METHOD FOR INCREASING THE DIFFERENCE BETWEEN THE MELTING TEMPERATURE AND THE CRYSTALLIZATION TEMPERATURE OF A POLYAMIDE POWDER

(30) Priorité: 29.04.2008 FR 0852863
(43) Date de publication de la demande: 19.01.2011
(60) Demande divisionnaire: 18168873.0
(73) Titulaire: ARKEMA FRANCE, 92700 Colombes (FR)
(72) Inventeur: FILOU, Grégory, 27500 Manneville Sur Risle (FR); MATHIEU, Cyrille, F-76100 Rouen (FR); SENFF, Holger, F-64230 Lescar (FR)
(74) Mandataire: Renard, Emmanuelle
(86) Numéro de dépôt international: PCT/FR2009/050788
(87) Numéro de publication internationale: WO 2009/138692

(56) Documents cités:
- EP-A- 0 603 813
- EP-A1- 2 103 643
- WO-A-2005/082973
- WO-A-2008/087335
- FR-A- 2 873 380
- US-A- 5 739 262
- ACIERNO ET AL: "Effect of short chain branching upon the crystallization of model polyamides-11" POLYMER, ELSEVIER SCIENCE PUBLISHERS B.V, GB, vol. 46, no. 23, 14 novembre 2005 (2005-11-14), pages 10331-10338, XP005115611 ISSN: 0032-3861
- GAYMANS R J ED - ROGERS M E ET AL: "3 POLYAMIDES" SYNTHETIC METHODS IN STEP-GROWTH POLYMERS, JOHN WILEY & SONS, INC, HOBOKEN NJ, [Online] 29 juillet 2003 (2003-07-29), pages 135-195, XP002487964 ISBN: 978-0-471-38769-5 Extrait de l'Internet: URL:http://www3.interscience.wiley.com/cgi -bin/summary/104549926/SUMMARY> [extrait le 2008-07-11]

## Description

### Domaine de l'invention

La présente invention se rapporte aux polyamides, tels que les copolyamides et les copolyesteramides, présentant une différence accrue entre leur température de fusion et leur température de cristallisation (Tf - Tc). La présente invention se rapporte également à un procédé de fabrication de poudres de tels copolyamides ou copolyesteramides, et ce quel que soit le type de polymérisation employé au cours du procédé : polycondensation hydrolytique, polymérisation anionique ou cationique.

Un grand écart entre la Tf et la Tc d'une poudre à base de polyamides est particulièrement utile dans de nombreux usages, et notamment dans la technologie d'agglomération de poudre par fusion ou frittage provoqué par un rayonnement tel que par exemple un faisceau laser (laser sintering), un rayonnement infra rouge ou un rayonnement UV ou toute source de rayonnement électromagnétique permettant de faire fondre la poudre pour fabriquer des objets.

### Technique antérieure

La technologie d'agglomération de poudres de polyamide sous un faisceau laser sert à fabriquer des objets en trois dimensions tels que des prototypes et des modèles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre de polyamide sur une plaque horizontale maintenue dans une enceinte chauffée à une température située entre la température de cristallisation Tc et la température de fusion Tf de la poudre de polyamide. Le laser agglomère des particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre et le laser agglomère des particules de poudre selon une géométrie correspondant à cette nouvelle tranche de l'objet et ainsi de suite. La procédure est répétée jusqu'à ce que l'on ait fabriqué tout l'objet. On obtient à l'intérieur de l'enceinte un objet entouré de poudre. Les parties qui n'ont pas été agglomérées sont donc restées à l'état de poudre. Ensuite on refroidit doucement l'ensemble et l'objet se solidifie dès que sa température descend en dessous de la température de cristallisation Tc. Après complet refroidissement, on sépare l'objet de la poudre qui peut être réutilisée pour une autre opération.

Immédiatement après l'action du faisceau laser, la température de l'échantillon est supérieure à la température de cristallisation (Tc) de la poudre. Mais il arrive que l'apport d'une nouvelle couche de poudre plus froide fasse chuter rapidement la température de la pièce qui, lorsqu'elle passe en dessous de ladite Tc, entraîne des déformations (phénomène de CURLING). De même, lorsque la température de la poudre en machine s'approche trop de la température de fusion (Tf) de la poudre, cela entraîne une prise en masse autour des pièces (phénomène de « CAKING » en anglais), qui se manifeste par la présence de grumeaux ou mottes de poudre en certains endroits de la surface de l'objet, au lieu d'avoir une bonne définition de l'objet final.

Pour éviter ces phénomènes, il est donc important d'éloigner le plus possible la Tc de la Tf de la poudre. L'écart Tf - Tc de la poudre détermine la fenêtre de température de travail du dispositif qui sert à agglomérer les particules de poudre par fusion provoquée par un rayonnement. Cette fenêtre de travail est définie par sa limite supérieure de température et sa limite inférieure de température. La limite supérieure de la fenêtre de travail correspond à la température à laquelle se fait l'agglomération ou le caking. La limite inférieure de la fenêtre de travail correspond à la température à laquelle se forme une distorsion ou déformation ou « curling ». Cette fenêtre de travail du dispositif est généralement estimée à environ 10°C par l'homme du métier pour une utilisation de la poudre en machine dans de bonnes conditions, c'est à dire sans voir apparaître les phénomènes décrits ci-dessus, et qui sont à l'origine de défauts sur les pièces obtenues.

Par ailleurs, une enthalpie de fusion (ΔHf) la plus élevée possible est requise afin d'obtenir une bonne définition géométrique des pièces fabriquées. En effet, si cette dernière est trop faible, l'énergie apportée par le laser est suffisante pour fritter par conduction thermique les particules de poudre proches des parois en construction et ainsi la précision géométrique de la pièce n'est plus satisfaisante.

Il est clair que tout ce qui vient d'être expliqué pour l'agglomération de poudres de polyamide sous faisceau laser est valable quel que soit le rayonnement électromagnétique qui provoque la fusion, que le procédé de fusion soit sélectif ou non sélectif. La demande WO 2008/087335 A2 concerne un procédé de préparation de poudres de polyamide par polymérisation anionique en solution. La demande EP 2103643 A1 divulgue des poudres de copolyamide destinées à être employées dans un procédé de fusion sélectif. Le brevet US 6245281 (EP0911142) décrit l'utilisation, pour le frittage laser sélectif, de poudres de polyamide 12 (PA 12) de point de fusion et d'enthalpie de fusion augmentés. Leur Tf est comprise dans la gamme allant de 185 à 189°C, leur Tc est comprise dans la gamme allant de 138 à 143°C (d'où 42°C < Tf-Tc < 51°C) et leur ΔHf vaut 112±17 J/g. Ces poudres sont obtenues par reprécipitation d'un polyamide 12 préparé via ouverture de cycle puis polycondensation de lauryllactame, selon le procédé décrit dans le brevet DE 2906647 (= US 4334056). Ce procédé nécessite plusieurs étapes, dans lesquelles on fabrique d'abord du PA 12 par condensation puis on le dissout dans l'éthanol entre 130 et 150°C, et on refroidit doucement la solution d'éthanol en dessous de 125°C sous agitation, pour faire précipiter le PA 12 sous forme de poudre. Un inconvénient des poudres obtenues par ce procédé est l'évolution gazeuse pendant le procédé de frittage de monomères résiduels présents dans ces poudres, en particulier quand la chambre de fabrication est maintenue à une température juste inférieure à la température de fusion du polymère. Ces monomères gazeux, après sublimation se déposent sur les composants de la machine, ce qui l'endommage. En particulier, la condensation de ces monomères sur les surfaces optiques altère les conditions de fabrication et entraîne une performance et précision moindres. Pour réduire ce problème, une étape intermédiaire compliquée peut être ajoutée pendant la préparation de la poudre de polyamide. Cette étape supplémentaire consiste à extraire les monomères résiduels du polyamide dans l'alcool chaud, et nécessite une manipulation coûteuse.

Le brevet FR2867190 décrit un procédé de fabrication d'une poudre de polyamide 12 de Tf élevé (Tc restant inchangée) par un procédé de synthèse de type anionique à partir de lauryllactame en solution dans un solvant en présence d'une charge et d'un amide de formule R1-NH-CO-R2. Le procédé de ce document consiste à mettre le solvant en état de sursaturation de lactame, c'est-à-dire à une température inférieure à la Tc du lactame dans le solvant. Les poudres de polyamide 12 obtenues selon ce procédé ont très peu de monomères résiduels, ont un point de fusion d'au moins 180°C, et de préférence compris dans la gamme de température allant de 182°C à 184°C, et une température de cristallisation de l'ordre de 135 ± 1°C. Ce procédé implique une maîtrise et un suivi très précis de la température dans les conditions industrielles.

Le brevet FR2873380 décrit un procédé qui permet d'augmenter la température de fusion et l'enthalpie de fusion d'un polyamide, sans modifier la température de cristallisation de la poudre. Dans ce procédé, il s'agit d'augmenter la Tf de polyamides déjà fabriqués, par exemple de PA 11, par un traitement à l'eau. Du polyamide, sous forme divisée (granulés ou poudre) est mis en contact à l'état solide avec de l'eau ou de la vapeur d'eau à une température proche de sa température de cristallisation Tc, puis séparé de l'eau et séché. Ce procédé implique donc plusieurs étapes ultérieures à la fabrication du polyamide en lui-même, l'étape de séchage étant une étape limitante du procédé.

La demande française n° 06.56029 concerne un procédé de fabrication de particule de poudre ensemencée constituée par une écorce en polyamide et un coeur en polyamide. Le procédé utilise la polymérisation anionique de monomère de lauryllactame, de caprolactame ou de leur mélange en solution dans un solvant en présence de semences qui sont des particules de poudre de polyamide. Cette structure caractéristique coeur/écorce de la poudre de polyamide ensemencée entraîne une Tc plus faible, la Tf étant inchangée. Les poudres obtenues présentent une différence Tf - Tc en valeur absolue augmentée par rapport aux poudres de l'art antérieur. Toutefois, l'écart obtenu entre Tf et Tc, n'est pas aussi grand qu'avec le procédé du brevet FR2867190 précédemment cité.

La présente invention a donc pour but de fournir un procédé pour augmenter efficacement la différence Tf - Tc des polyamides existants.

En particulier, la présente invention a pour but de fournir un procédé de fabrication de polyamide, notamment sous forme de poudre ou de granulés, de différence Tf - Tc agrandie, qui soit simple, rapide (comportant le moins d'étapes possibles), facile à mettre en ouvre et qui n'entraîne pas ou très peu de monomères résiduels susceptibles d'affecter le fonctionnement des machines utilisées pour la fabrication d'objets par agglomération de poudres.

Dans l'art antérieur, sont décrits divers moyens d'adapter les poudres utilisées pour améliorer les procédés d'agglomération, notamment dans les documents WO 2005085326, WO 2005082979, et WO 2005082973. Toutefois ces adaptations des poudres ont généralement pour inconvénient de modifier considérablement les propriétés mécaniques des poudres et donc celles de l'objet 3D final. Par exemple, le document WO2005082979 concerne l'utilisation de poudres comprenant un copolymère, copolyester et/ou copolyamide (Vestamelt®), dans la fabrication d'objets selon un procédé sélectif (laser) d'agglomération couche par couche de poudre. Les exemples de copolymères sont notamment le PA 12/6/6.12 (selon le ratio 40/30/30 en pourcentage massique) et le PA 12/6/6.6 (selon le ratio 33/33/33 ou le ratio 60/25/15 en pourcentage massique). L'utilisation de ces poudres de copolymère vise à mettre en oeuvre le procédé d'agglomération à des températures plus faibles qu'avec les poudres conventionnelles. Les matériaux obtenus avec les poudres de copolymère décrites sont mous et n'ont pas un module suffisant, ni une tenue suffisante aux températures d'usage, par exemple à température ambiante, ou bien à la température de chauffe d'un moteur dans le domaine aéronautique, automobile, ou encore dans le domaine informatique (chaleur dégagée par les batteries).

La présente invention a donc pour but d'augmenter la différence entre la Tf et la Tc des poudres de polyamide tout en conservant leurs propriétés mécaniques pour que l'objet final obtenu par agglomération de ces poudres, ait des propriétés compatibles avec son utilisation. En particulier, le matériau de l'objet final doit avoir une ténacité et une flexibilité suffisantes, avec en particulier un module élastique supérieur à 1500 N/mm² et un allongement à la rupture supérieur à 15%, de préférence supérieur à 20%.

La Société déposante a maintenant trouvé un procédé de fabrication de polyamides conçus pour répondre à ces différentes exigences. Le procédé selon l'invention est un procédé pour augmenter l'écart Tf-Tc des polyamides, qui est simple, rapide (en une étape), et n'entraîne que peu de monomères résiduels. Le procédé de l'invention conserve les propriétés mécaniques (module et allongement à la rupture) des polyamides usuels dans les poudres obtenues, de même que dans les articles 3D, tels que ceux obtenus par les technologies d'agglomération par fusion de ces poudres au moyen d'un rayonnement électromagnétique.

### Résumé de l'invention

La présente invention a donc pour objet l'utilisation d'au moins un co-monomère minoritaire dans un procédé de polymérisation d'au moins un monomère majoritaire pour diminuer la température de cristallisation et la température de fusion d'un polyamide issu de la polymérisation dudit au moins un monomère majoritaire, et pour que la diminution de la température de cristallisation soit supérieure à la diminution de la température de fusion respectivement par rapport à la température de cristallisation et à la température de fusion du polyamide issu de la polymérisation dudit au moins un monomère majoritaire, lesdites températures de fusion et de cristallisation étant mesurées par DSC selon la norme ISO 11357-3, ledit au moins un co-monomère minoritaire étant polymérisé selon le même processus de polymérisation que ledit au moins un monomère majoritaire et, ledit au moins un co-monomère minoritaire étant choisi parmi les acides aminocarboxyliques, les couples diamine.diacide, les lactames et/ou les lactones, et ledit au moins un co-monomère minoritaire représentant de 0.1% à 20% en masse du mélange total desdits monomère(s) et co-monomère(s), de préférence de 0.5% à 15% en masse dudit mélange total, de préférence de 1% à 10% en masse dudit mélange total, ledit au moins un monomère majoritaire comprenant de l'acide amino-11-undécanoique et/ou du lactame 12 et/ou le couple décanediamine.acide sébacique (10.10). Avantageusement, la polymérisation entre les différents monomères minoritaire(s) et majoritaire(s) est une polymérisation anionique.

Avantageusement, la polymérisation entre les différents monomères minoritaire(s) et majoritaire(s) est une polycondensation hydrolytique.

Avantageusement, ledit au moins un comonomère minoritaire est choisi parmi les acides aminocarboxyliques, de préférence alpha,oméga-aminocarboxyliques, comprenant de 4 à 18 atomes de carbone, les couples diamine.diacide comprenant de 4 à 18 atomes de carbone, les lactames comprenant de 3 à 18 atomes de carbone, les lactones comprenant de 3 à 18 atomes de carbone et leurs mélanges.

Avantageusement, ledit au moins un co-monomère minoritaire comprend de l'acide amino-11-undécanoique, de l'acide n-heptylamino-11-undécanoïque, du lauryllactame, du caprolactame et/ou de la caprolactone.

Avantageusement, ledit au moins un comonomère minoritaire comprend l'un au moins des couples diamine.diacide suivants : 6.6, 6.10, 6.11, 6.12, 6.14, 6.18, 10.10, 10.12, 10.14, 10.18, 10.T, T étant l'acide téréphtalique.

La présente invention divulgue également un procédé pour diminuer la température de cristallisation et la température de fusion d'un polyamide (homopolyamide ou copolyamide) issu de la polymérisation d'au moins un monomère majoritaire, dans lequel la diminution de la température de cristallisation est supérieure à la diminution de la température de fusion, ledit procédé comprenant une étape de polymérisation dudit au moins un monomère majoritaire avec au moins un co-monomère différent minoritaire polymérisé selon le même processus de polymérisation que ledit au moins un monomère majoritaire, ledit au moins un co-monomère minoritaire étant choisi parmi les acides aminocarboxyliques, les couples diamine.diacide, les lactames et/ou les lactones, et ledit au moins un co-monomère minoritaire représentant de 0.1% à 20% en masse du mélange total desdits monomère(s) et co-monomère(s), de préférence de 0.5% à 15% en masse dudit mélange total, de préférence de 1% à 10% en masse dudit mélange total.

De manière encore plus préférée, ledit au moins un co-monomère minoritaire représente de 1% à 7% en masse du mélange total desdits monomère(s) et co-monomère(s), de préférence de 1% à 5% en masse dudit mélange total, et ledit au moins un co-monomère minoritaire comprend de l'acide amino-11-undécanoique et/ou du lauryllactame et/ou du caprolactame et/ou de la caprolactone et/ou l'un au moins des couples diamine.diacide suivants: 6.6, 6.10, 6.11, 6.12, 6.14, 6.18, 10.10, 10.12, 10.14, 10.18 et/ou 10.T, T étant l'acide téréphtalique.

Selon un mode de réalisation de l'utilisation selon l'invention, la polymérisation entre les différents monomères minoritaire(s) et majoritaire(s) est une polymérisation anionique. Selon un autre mode de réalisation de l'utilisation selon l'invention, la polymérisation entre les différents monomères minoritaire(s) et majoritaire(s) est une polycondensation hydrolytique. Ledit au moins un monomère majoritaire comprend de l'acide amino-11-undécanoique et/ou du lactame 12 et/ou le couple décanediamine.acide sébacique (10.10).

Avantageusement, ledit procédé comprend en outre, après ladite étape de polymérisation, au moins une étape choisie parmi : dissolution, précipitation, extrusion, atomisation, pulvérisation, nébulisation à froid, nébulisation à chaud, broyage, broyage cryogénique, tamisage, remontée en viscosité et leurs combinaisons.

La présente invention divulgue également une poudre de copolyamide ou de copolyesteramide, susceptible d'être fabriquée selon le procédé défini précédemment, ladite poudre étant issue de la polymérisation d'au moins deux monomères différents polymérisés selon le même processus de polymérisation, l'un au moins des comonomères étant minoritaire et choisi parmi les acides aminocarboxyliques, les couples diamine.diacide, les lactames et/ou les lactones et ledit au moins un comonomère minoritaire représentant de 0.1% à 20% en masse du mélange total desdits monomère(s) et co-monomère(s), de préférence de 0.5% à 15% en masse dudit mélange total, de préférence de 1% à 10% en masse dudit mélange total. De manière encore plus préférée, ledit au moins un co-monomère minoritaire représente de 1% à 7% en masse du mélange total desdits monomère(s) et co-monomère(s), de préférence de 1% à 5% en masse dudit mélange total, et ledit au moins un co-monomère minoritaire comprend de l'acide amino-11-undécanoique et/ou du lauryllactame et/ou du caprolactame et/ou de la caprolactone et/ou l'un au moins des couples diamine.diacide suivants : 6.6, 6.10, 6.11, 6.12, 6.14, 6.18, 10.10, 10.12, 10.14, 10.18 et/ou 10.T, T étant l'acide téréphtalique.

Selon un mode de réalisation, la poudre comprend un monomère majoritaire d'acide amino-11-undécanoïque et au moins un monomère minoritaire choisi parmi le couple hexaméthylène diamine et acide adipique (6.6), le lauryllactame, le caprolactame et/ou la caprolactone. Selon un autre mode de réalisation, la poudre comprend un monomère majoritaire de lauryllactame et un monomère minoritaire choisi parmi le caprolactame, la caprolactone et/ou le couple hexaméthylène diamine.acide adipique (6.6).

De préférence, la poudre est choisie parmi les polyamides suivants: PA11/6.6 comprenant de 1 à 7% d'acide amino-11-undécanoïque, les PA 11/N-heptylaminoacide comprenant de 1 à 5% de N-heptylaminoacide, les PA 12/11 comprenant de 1 à 12%, de préférence de 2 à 5%, d'acide amino-11-undécanoïque, et les PA 12/6 comprenant de 1 à 5% de lactame 6, tous les pourcentages étant donnés en masse sur la masse totale du mélange de monomère et de co-monomère de chaque PA préféré.

La présente invention divulgue également l'utilisation de poudre telle que définie précédemment, dans des revêtements, tels que les peintures, les vernis, les compositions anticorrosion, les revêtements textiles, les cosmétiques; les additifs pour papier; les technologies d'agglomération de poudre par fusion ou frittage provoqué par un rayonnement électromagnétique pour fabriquer des objets ; des gels d'électrophorèse, des matériaux composites multicouches ; l'industrie de l'emballage; les jouets; le textile; l'automobile et/ou l'électronique.

La présente invention divulgue également un procédé de fabrication d'objets en polyamide par agglomération de poudre par fusion en utilisant un rayonnement électromagnétique, la poudre de polyamide ayant été obtenue préalablement selon le procédé défini précédemment ou étant conforme à la poudre définie précédemment.

La présente invention divulgue également un article manufacturé obtenu par fusion à l'aide d'un rayonnement électromagnétique d'une poudre telle que définie précédemment.

### Description détaillée

Le procédé de l'invention permet de diminuer simultanément la température de cristallisation et la température de fusion des polyamides. Toutefois, le procédé de l'invention diminue de façon importante la température de cristallisation des polyamides, tandis que la température de fusion reste presque inchangée. Il en résulte des polyamides dont l'écart Tf - Tc est plus grand en valeur absolue comparativement aux polyamides usuels non fabriqués selon le procédé de l'invention.

Par polyamide au sens de l'invention on entend les produits de condensation des lactames, des aminoacides ou des diacides avec les diamines et, en règle générale, tout polymère formé par des motifs reliés entre eux par des groupes amides.

Le procédé de l'invention comprend de polymériser au moins deux monomères différents, appelés « co-monomères », c'est à dire au moins un monomère et au moins un co-monomère (monomère différent du premier monomère) pour former un copolymère tel qu'un copolyamide abrégé CoPA ou bien un coplyesteramide abrégé CoPEA, tels que définis ci-après.

Le terme « monomère » dans la description suivante doit être pris au sens d'«unité répétitive ». Le cas où une unité répétitive est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à former un polymère.

Le procédé de l'invention comprend la polymérisation d'au moins un monomère majoritaire, c'est à dire représentant au moins 80% en masse sur la masse totale du mélange de monomères, et au moins un comonomère minoritaire, représentant au maximum 20% en masse sur la masse totale du mélange total desdits monomère(s) et co-monomère(s).

La polymérisation du ou des monomères majoritaires peut être réalisée à partir d'un ou plusieurs monomères amide comprenant individuellement de 4 à 30 atomes de carbone, de préférence de 8 à 28 atomes de carbone.

Selon l'invention, ledit au moins un co-monomère minoritaire représente de 0.1% à 20% en masse dudit mélange total desdits monomère(s) et co-monomère(s), de préférence de 0.5% à 15% en masse dudit mélange total, de préférence de 1% à 10% en masse dudit mélange total. De manière encore plus préférée, ledit au moins un co-monomère minoritaire représente de 1% à 7% en masse du mélange total desdits monomère(s) et co-monomère(s), de préférence de 1% à 5% en masse dudit mélange total.

Selon un premier mode de réalisation, le procédé pour augmenter l'écart Tf-Tc des poudres à base de polyamide (homopolyamide ou copolyamide) comprend la fabrication de poudres de CoPA à partir :
- d'au moins un monomère majoritaire, correspondant au(x) monomère(s) constitutif(s) du polyamide de base dont on veut augmenter l'écart Tf-Tc, et
- d'au moins un comonomère différent minoritaire.

Par copolyamide (abrégé CoPA), on entend les produits de polymérisation d'au moins deux monomères différents choisis parmi :
- les monomères de type aminoacides ou acides aminocarboxyliques, et de préférence les acides alpha, oméga-aminocarboxyliques;
- les monomères de type lactames ayant entre 3 à 18 atomes de carbone sur le cycle principal et pouvant être substitués ;
- les monomères de type « diamine.diacide » issus de la réaction entre une diamine aliphatique ayant entre 4 et 18 atomes de carbone et un diacide carboxylique ayant entre 4 et 18 atomes de carbone; et
- leurs mélanges, avec des monomères à nombre de carbone différent dans le cas de mélanges entre un monomère de type aminoacide et un monomère de type lactame.

### Monomères de type aminoacides :

A titre d'exemples d'alpha,oméga-aminoacides, on peut citer ceux ayant de 4 à 18 atomes de carbone, tels que les acides aminocaproïque, amino-7-heptanoïque, amino-11-undécanoïque, n-heptyl-11-aminoundécanoïque et amino-12-dodécanoïque.

### Monomères de type lactames :

A titre d'exemples de lactames, on peut citer ceux ayant de 3 à 18 atomes de carbone sur le cycle principal et pouvant être substitués. On peut citer par exemple le β,β-diméthylpropriolactame, le α,α-diméthylpropriolactame, l'amylolactame, le caprolactame aussi appelé lactame 6, le capryllactame aussi appelé lactame 8, l'oenantholactame, le 2-pyrrolidone et le lauryllactame aussi appelé lactame 12.

### Monomères de type « diamine.diacide » :

A titre d'exemples d'acide dicarboxylique, on peut citer les acides ayant entre 4 et 18 atomes de carbone de carbone. On peut citer par exemple, l'acide adipique, l'acide sébacique, l'acide azélaique, l'acide subérique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH2)₁₀-COOH.

A titre d'exemple de diamine, on peut citer les diamines aliphatiques ayant de 4 à 18 atomes, pouvant être aryliques et/ou cycliques saturées. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM), la méthaxylyènediamine, le bis-p aminocyclohexylméthane et la triméthylhexaméthylène diamine.

A titre d'exemples de monomères de type « diamine.diacide », on peut citer ceux résultant de la condensation de l'hexaméthylène diamine avec un diacide C6 à C36, notamment les monomères : 6.6, 6.10, 6.11, 6.12, 6.14, 6.18. On peut citer les monomères résultant de la condensation de la décanediamine avec un diacide C6 à C36, notamment les monomères : 10.10, 10.12, 10.14, 10.18; ou résultant de la condensation de la décanediamine avec un acide téréphtalique, c'est-à-dire le monomère 10.T.

A titre d'exemples de copolyamides formés à partir des différents types de monomères décrits ci-dessus, on peut citer les copolyamides résultant de la condensation d'au moins deux acides alpha oméga aminocarboxyliques ou de deux lactames ou d'un lactame et d'un acide alpha,oméga-aminocarboxylique. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et d'au moins un autre monomère choisi parmi les diamines aliphatiques différentes de la précédente et les diacides aliphatiques différents du précédent.

A titre d'exemples de copolyamides, on peut citer des copolymères de caprolactame et de lauryllactame (PA 6/12), des copolymères de caprolactame, d'hexaméthylène diamine et d'acide adipique (PA 6/6.6), des copolymères de caprolactame, de lauryllactame, d'hexaméthylène diamine et d'acide adipique (PA 6/12/6.6), des copolymères de caprolactame, d'hexaméthylène diamine et d'acide azélaïque, d'acide amino 11 undécanoïque, et de lauryllactame, (PA 6/6.9/11/12), des copolymères de caprolactame, d'acide adipique et d'hexaméthylène diamine, d'acide amino-11-undécanoïque, de lauryllactame (PA 6/6.6/11/12), des copolymères d'hexaméthylène diamine, d'acide azélaïque, et de lauryllactame (PA 6.9/12), des copolymères de 2-pyrrolidone et de caprolactame (PA 4/6), des copolymères de 2-pyrrolidone et de lauryllactame (PA 4/12), des copolymères de caprolactame et d'acide amino 11 undécanoïque (PA 6/11), des copolymères de lauryllactame et de capryllactame (PA 12/8), des copolymères d'acide amino 11 undécanoïque et de 2-pyrrolidone (PA11/4), des copolymères de capryllactame et de caprolactame (PA 8/6), des copolymères de capryllactame et de 2-pyrrolidone (PA 8/4), des copolymères de lauryllactame et de capryllactame (PA 12/8), des copolymères de Lauryllactame et d'acide amino-11-undécanoïque (PA 12/11).

Avantageusement, ledit au moins un monomère majoritaire et/ou ledit au moins un comonomère minoritaire utilisés par le procédé de l'invention comprend de l'acide amino-11-undécanoique ou du Lactame 12.

Selon un deuxième mode de réalisation de l'invention, le procédé pour augmenter l'écart Tf-Tc des poudres à base de polyamide comprend de fabriquer des poudres de copolyesteramides (CoPEA), par polymérisation d'au moins un monomère majoritaire, correspondant au(x) monomère(s) constitutif(s) du polyamide de base dont on veut augmenter l'écart Tf-Tc, et d'au moins un comonomère minoritaire, comprenant une lactone.

Le procédé de préparation de ces poudres de copolyesteramides par polymérisation anionique est décrit dans le document EP1172396.

Les monomères majoritaires pouvant être utilisés pour fabriquer les copolyesteramides sont les mêmes que ceux cités plus haut. On utilise avantageusement au moins un lactame, choisi de préférence parmi le caprolactame et le lauryllactame. A titre d'exemples de lactones, on peut citer la caprolactone, la valérolactone et la butyrolactone. On utilise de préférence la caprolactone et/ou la butyrolactone.

S'agissant des copolyesteramides, on utilise avantageusement ledit au moins un monomère majoritaire et ledit au moins un comonomère minoritaire comprenant la lactone dans les proportions respectives suivantes de monomères majoritaire-minoritaire (% massique) allant de : 80-20% à 99,5-0,5% (le total étant à 100%).

Selon un troisième mode de réalisation, le procédé selon l'invention utilise des mélanges de copolyamide et/ou de copolyesteramide.

Selon le procédé de l'invention, les CoPA ou les CoPEA, de même que les différents monomères (minoritaire(s) et majoritaire(s)) qui entrent dans la composition de ces CoPA ou CoPEA, en particulier les éventuels monomères de type diamine.diacide, sont issus d'un même processus de polymérisation, quel qu'il soit : polycondensation hydrolytique, polymérisation anionique, polymérisation cationique, etc.

Selon un mode de réalisation du procédé de l'invention, la polymérisation entre les différents monomères (minoritaire(s) et majoritaire(s)) est du type polycondensation hydrolytique. La polymérisation hydrolytique, surtout utilisée pour les lactames, est induite par l'eau à haute température. Par exemple, la polymérisation hydrolytique des lactames consiste à ouvrir le lactame par l'eau puis à chauffer sous pression pour polymériser. Eventuellement, un catalyseur tel que l'acide phosphorique peut également être employé dans le procédé hydrolytique.

A titres d'exemples de CoPA ou CoPEA issus de polymérisation hydrolytique, on peut citer ceux comprenant un monomère majoritaire d'acide amino-11-undécanoïque et au moins un monomère minoritaire choisi parmi le couple hexaméthylène diamine et acide adipique (6.6), le lauryllactame, le caprolactame et/ou l'acide n-heptyl amino-11-undécanoïque.

Selon un autre mode de réalisation du procédé de l'invention, la polymérisation entre les différents monomères (minoritaire(s) et majoritaire(s)) est du type polymérisation anionique. La polymérisation anionique s'effectue à des températures bien inférieures à celles appliquées pour les mécanismes hydrolytiques ou cationiques. La polymérisation anionique est conduite en continu ou bien de préférence, en discontinu (batch) dans un solvant. La voie anionique concerne plus spécifiquement les molécules cycliques, telles que les lactames et lactones. Par exemple, le mécanisme de polymérisation anionique des lactames se déroule en trois étapes : une étape d'initiation pour former l'anion lactamate, puis une réaction d'activation qui conduit à l'acyllactame et enfin l'étape de propagation. La méthode de polymérisation anionique est donc fondée essentiellement sur l'utilisation d'un catalyseur et d'un activateur en présence éventuellement d'une charge minérale ou organique finement divisée ayant un rôle de germe de cristallisation et en présence d'un amide. Le procédé est décrit dans les brevets EP192515 et EP303530.

S'agissant du catalyseur, on peut citer le sodium ou un de ses composés comme l'hydrure de sodium ou le méthylate de sodium.

S'agissant de l'activateur, on peut citer les lactame-N-carboxy-anilides, les isocyanates, les carbodi-imides, les cyanimides, les acyl-lactames, les triazines, les urées, les imides-N-substituées et les esters entre autres.

S'agissant de la charge, on peut citer de la poudre de PA, par exemple de la poudre d'ORGASOL®, de la silice, du talc, etc.

S'agissant du N,N'-alkylène bis amide, on peut citer plus particulièrement le N, N'éthylène bis stéaramide (EBS), le N,N'éthylène bis oléamide, le N, N'éthylène bis palmitamide, gadoléamide, cétoléamide et érucamide, le N, N'-dioléyldipamide et le N, N'diérucylamide, etc.

A titres d'exemples de CoPA ou de CoPEA issus de polymérisation anionique, on peut citer ceux comprenant un monomère majoritaire de lauryllactame et un monomère minoritaire choisi parmi le caprolactame, la caprolactone et/ou le couple hexaméthylène diamine.acide adipique (6.6).

La répartition granulométrique très étroite des poudres obtenues avantageusement par polymérisation anionique favorise leur utilisation pour la fabrication de pièces par agglomération sous rayonnement (Infra rouge, UV curing,...) parce qu'elle conduit à une définition des pièces très fine, et qu'elle diminue les problèmes de formation de poussières lors de la mise en oeuvre de la poudre. De plus, la masse moléculaire du polymère n'augmente pas, pas même après une exposition longue a des températures proches et inférieures à la température de fusion de la poudre. Ceci implique que la poudre peut être recyclée un grand nombre de fois sans modification de son comportement lors de la fabrication de pièces par agglomération sous rayonnement, les propriétés desdites pièces ne variant pas également au cours du procédé. En outre, ce procédé permet la fabrication d'objet par agglomération de poudre ayant de bonnes propriétés mécaniques.

Bien entendu, tout autre procédé de polymérisation est également envisageable, dès l'instant que tous les (co)monomères employés pour fabriquer un CoPa ou un CoPEA selon l'invention sont polymérisables entre eux selon le même procédé de polymérisation.

A titre d'exemple supplémentaire, on peut citer la polymérisation cationique, catalysée par des acides dans des conditions anhydres. Dans ce cas, des acides tels que l'acide chlorhydrique, l'acide phosphorique ou l'acide bromhydrique sont les plus réactifs mais l'utilisation d'acides de Lewis ou de sels d'ammoniums est également possible. Il existe essentiellement deux types d'activation et de croissance de la chaîne. Soit le monomère activé réagit avec le centre réactif neutre, soit c'est le centre réactif qui est activé et le monomère neutre.

En fonction du mode de synthèse, on obtient directement de la poudre de CoPA ou de CoPEA ou alors des granulés de CoPA ou de CoPEA.

Pour obtenir de la poudre de CoPA ou CoPEA, il existe deux modes d'obtention: par voie directe ou par voie indirecte.

Dans le cas de la voie directe, on peut citer la polymérisation et précipitation (polymérisation précipitante) du polymère dans un solvant. De la poudre est obtenue directement au cours de la polymérisation. C'est généralement le cas lors de la polymérisation anionique.

Dans le cas de la voie indirecte, pour obtenir de la poudre, on peut citer par exemple la dissolution-précipitation, c'est-à-dire solubilisation du polymère CoPA ou CoPEA dans un solvant à chaud puis précipitation de la poudre par refroidissement lent. On peut également citer l'atomisation, c'est-à-dire la pulvérisation d'une solution du polymère refroidi. Cette technique est également appelée « nébulisation à froid » ou « spray cooling ». Il existe aussi un procédé d'extrusion de polymère, suivi d'atomisation par une buse haute pression chauffée, puis refroidissement de la poudre obtenue. Cette technique est également appelée « nébulisation à chaud » ou « spray drying ». On peut encore citer le broyage/tamisage de granulés de polymère, éventuellement suivi d'une remontée en viscosité. Le broyage peut être cryogénique. Toutes ces techniques d'obtention de poudre sont déjà bien connues de l'homme du métier.

Pour une utilisation en technologie d'agglomération par fusion provoquée par un rayonnement, on utilise aussi bien des poudres que des granulés. Les granulés sont des particules de forme quelconque de quelques mm à 1 cm. Ce sont par exemple les granulés qu'on obtient en sortie d'une extrudeuse. On utilise préférentiellement des poudres dans le procédé d'agglomération par fusion ou frittage. Ces poudres peuvent avoir une taille jusqu'à 350 µm et sont avantageusement de taille comprise entre 10 et 100 µm. De préférence le D50 est de 60 µm (c'est à dire que 50% des particules ont une taille inférieure à 60 µm).

La présente invention divulgue également une poudre de copolyamide ou de copolyesteramide fabriquée selon le procédé décrit précédemment, ladite poudre étant issue de la polymérisation d'au moins deux monomères différents polymérisés selon le même procédé de polymérisation, l'un au moins des comonomères étant minoritaire et choisi parmi les acides aminocarboxyliques, les couples diamine.diacide, les lactames et/ou les lactones telles que décrits précédemment, et ledit au moins un comonomère minoritaire représentant 0.1% à 20% en masse du mélange total de monomères, de préférence de 0.5% à 15% en masse du mélange total de monomères, de préférence de 1% à 10% en masse du mélange total de monomères. De manière encore plus préférée, ledit au moins un co-monomère minoritaire représente de 1% à 7% en masse du mélange total desdits monomère(s) et co-monomère(s), de préférence de 1% à 5% en masse dudit mélange total et ledit au moins un co-monomère minoritaire comprend de l'acide amino-11-undécanoique et/ou du lauryllactame et/ou du caprolactame et/ou de la caprolactone et/ou l'un au moins des couples diamine.diacide suivants : 6.6, 6.10, 6.11, 6.12, 6.14, 6.18, 10.10, 10.12, 10.14, 10.18 et/ou 10.T, T étant l'acide téréphtalique.

Les poudres peuvent comprendre en outre des additifs qui contribuent à améliorer les propriétés de la poudre pour son utilisation en technologie d'agglomération. On peut citer par exemple des pigments pour la coloration, du TiO₂, des charges ou des pigments pour l'absorption infra rouge, le noir de carbone, des charges minérales pour diminuer les contraintes internes et des additifs anti-feu. On peut aussi rajouter des additifs permettant d'améliorer les propriétés mécaniques (contrainte à la rupture et allongement à la rupture) des pièces obtenues par fusion. Ces charges sont par exemple des fibres de verre, des fibres de carbone, des nano-charges, des nano-argiles et des nano-tubes de carbone. L'introduction de ces charges au moment de la synthèse permet d'améliorer leur dispersion et leur efficacité.

Les poudres peuvent avantageusement être utilisées dans les revêtements, les peintures, les compositions anticorrosion, les additifs pour papier, les technologies d'agglomération de poudre par fusion ou frittage provoqué par un rayonnement pour fabriquer des objets, les gels d'électrophorèse, les matériaux composites multicouches, l'industrie de l'emballage, les jouets, le textile, l'automobile et/ou l'électronique.

La présente invention divulgue également un procédé de fabrication d'objets en polyamide par agglomération de poudre par fusion en utilisant un rayonnement, la poudre de polyamide ayant été obtenue préalablement selon le procédé cité plus haut. A titre d'exemple de rayonnement, on peut citer celui fourni par un faisceau laser (le procédé s'appelle alors "laser sintering"). On peut encore citer le procédé dans lequel un masque est disposé entre la couche de poudre et la source du rayonnement, les particules de poudre protégées du rayonnement par le masque ne s'agglomèrent pas.

La présente invention divulgue également un article 3D manufacturé obtenu par fusion à l'aide d'un rayonnement électromagnétique d'une poudre. Cet article peut être choisi parmi les prototypes et les modèles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

### Exemples

Les exemples suivants illustrent des modes de réalisation de la présente invention sans toutefois la limiter.
Dans tous les exemples qui suivent :
- les diamètres moyens (en volume) sont déterminés à partir de la distribution granulométrique mesurée à l'aide d'un granulomètre de marque Coulter LS230, version 2.11a du logiciel.
- les viscosités relatives sont mesurées à 20°C, en solution à 0,5% massique dans le métacrésol (« Méthode Ato »).
- l'analyse des poudres ou granulés (mesure des caractéristiques thermiques) est faite par DSC selon la norme ISO 11357-3 "Plastics - Differential Scanning Calorimetry (DSC) Part 3: Détermination of temperature and enthalpy of melting and crystallization". Les températures qui intéressent ici plus particulièrement l'invention sont la température de fusion lors de la première chauffe (Tf1) et la température de cristallisation (Tc). En effet, de manière connue par l'homme du métier (du domaine de la fabrication d'objets 3D par agglomération de poudre par fusion), l'écart « Tf-Tc » correspond à Tf1-Tc.
Dans les exemples qui suivent, on indique donc indépendamment l'écart Tf-Tc ou l'écart Tf1-Tc.

### Exemple 1

Les produits du comparatif 1 et des exemples 1.1 à 1.3 sont préparés suivant le même mode opératoire de la façon suivante :

### Comparatif 1

On introduit dans le réacteur maintenu sous azote 2757 ml de solvant, puis successivement 899g de lactame 12 (Lauryllactame), 7,2 g d'EBS et 3,94g de charge organique qui est de la poudre de polyamide 12 (PA 12 : Orgasol® 2001 EXD NAT1). Après avoir mis en route l'agitation à 300t/min, on chauffe progressivement jusqu'à 105°C, puis on distille sous vide 360ml de solvant afin d'entraîner par azéotropie toute trace d'eau qui pourrait être présente.
Après retour à la pression atmosphérique, on introduit alors rapidement sous azote le catalyseur anionique, 2,7 g d'hydrure de sodium à 60% de pureté dans de l'huile et on augmente l'agitation à 550 t/min, sous azote à 105°C pendant 30 minutes.
Grâce à une petite pompe doseuse, on réalise une injection continue dans le milieu réactionnel de l'activateur choisi, à savoir l'isocyanate de stéaryle (19,2 g rempli à 220,5 g avec du solvant) selon le programme suivant :
- 26 g/h de solution d'isocyanate pendant 180 minutes
- 71,25g/h de solution d'isocyanate pendant 120 minutes.

Parallèlement, la température est maintenue à 105° C pendant 180 minutes pendant l'injection, puis est montée à 130°C en 90 minutes et maintenue à 130°C pendant encore 150 minutes après la fin d'introduction de l'isocyanate.
La polymérisation terminée, le réacteur est presque propre. Après refroidissement à 80°C, décantation et séchage, la poudre obtenue est soumise à une analyse DSC.
L'analyse DSC montre des Tf=183.7°C et Tc=139, 1°C.

Les poudres des exemples 1 à 3 sont fabriquées selon le même mode opératoire que dans l'exemple comparatif 1. Dans ces exemples 1 à 3 selon l'invention, on utilise, en plus du lactame 12, une faible quantité de comonomère de lactame 6.

### Exemple 1.1

On introduit dans le réacteur maintenu sous azote 2757 ml de solvant, puis successivement 899g de lactame 12, 18g de lactame 6, 7,2 g d'EBS et 3,94g d'Orgasol® 2001 EXD NAT1 (poudre PA12).
L'analyse DSC de la poudre obtenue montre que Tf=180,1°C et Tc=135,3°C.

### Exemple 1.2

On introduit dans le réacteur maintenu sous azote 2757 ml de solvant, puis successivement 899g de lactame 12, 36g de lactame 6, 7,2 g d'EBS et 3,94g d'Orgasol® 2001 EXD NAT1 (poudre PA12).
L'analyse DSC de la poudre obtenue montre que Tf=179,3°C et Tc=132,8°C.

### Exemple 1.3

On introduit dans le réacteur maintenu sous azote 2757 ml de solvant, puis successivement 899g de lactame 12, 45g de lactame 6, 7,2 g d'EBS et 3,94g d'Orgasol® 2001 EXD NAT1 (poudre PA12).
L'analyse DSC de la poudre obtenue montre que Tf=178,2°C et Tc=128,4°C.

Les résultats d'analyse DSC du Comparatif 1 et des Exemples 1.1 à 1.3 sont résumés dans le tableau 1.

**TABLEAU 1**

| | **Comparatif 1** | **Exemple 1.1** | **Exemple 1.2** | **Exemple 1.3** |
|---|---|---|---|---|
| **Lactame 6 (g)** | 0 | 18 | 36 | 45 |
| **Lactame 12 (g)** | 899 | 899 | 899 | 899 |
| **Pourcentage monomère/comonomère: 12/6 (%)** | 100/0 | 98/2 | 96/4 | 95/5 |
| **EBS (g)** | 7,2 | 7,2 | 7,2 | 7,2 |
| **Charge organique (g) (PA12)** | 3,94 | 3,94 | 3,94 | 3,94 |
| **Isocyanate de stearyle (g)** | 19,2 | 19.2 | 19.2 | 19.2 |
| **HNa (g)** | 2,7 | 2,7 | 2,7 | 2,7 |
| **Température de fusion Tf1 (°C)** | 183.7 | 180,1 | 179,3 | 178,2 |
| **Température de cristalisation (°C)** | 139,1 | 135,3 | 132,8 | 128,4 |
| **\|Tf-Tc\|** | 44,6 | 44,8 | 46,5 | 49,8 |
| **Viscosité relative de la poudre finale** | 1.32 | 1.25 | 1.19 | 1.25 |
| **Diamètre moyen (µm))** | 46 | 60 | 85 | 297 |

Les échantillons des exemples 1.1 à 1.3 selon l'invention, qui contiennent un monomère majoritaire de lauryllactame (lactame 12) et un monomère minoritaire de caprolactame (lactame 6) ont une température de fusion et une température de cristallisation plus basses et un écart |Tf-Tc| plus grand que le comparatif 1 (homopolyamide du lactame 12).

Dans une machine d'agglomération de poudre par fusion, l'utilisation des copolyamides des Exemples 1.1 à 1.3 permet d'optimiser plus facilement les réglages de la machine. Leur écart | Tf-Tc | plus grand permet une fenêtre de travail ou de transformation plus large (supérieure à 10°C). Cette fenêtre large apporte plus de souplesse à l'homme du métier pour ajuster les paramètres (notamment de température) de la machine et ainsi éviter d'un coté le phénomène de « caking » et de l'autre le phénomène de « curling » des pièces fabriquées.
Les différentes poudres selon l'invention sont chacune introduites dans une machine d'agglomération de poudre par fusion et sont soumises à un rayonnement Laser. Après refroidissement des différentes éprouvettes obtenues, celles-ci sont évaluées visuellement par un panel d'experts.
Le Tableau 2 suivant montre l'influence du procédé de l'invention sur l'importance des défauts de "caking" ou "prise en masse" ou "mottes" ou "grumeaux" de poudre en surface d'un l'objet 3D obtenu en Laser Sintering.

**TABLEAU 2**

| | Poudres utilisées pour le Laser Sintering | | Lactame 6 (en%) | Problème de caking |
|---|---|---|---|---|
| | Comparatif 1 | PA 12 | 0 | caking |
| Exemples selon l'invention | Exemple 0 | PA 12/6 | 1 | caking divisé par 3 |
| | Exemple 1 | PA 12/6 | 2 | Très peu de caking (divisé par 7) |
| | Exemple 2 | PA 12/6 | 4 | Pas de caking |
| | Exemple 3 | PA 12/6 | 5 | Pas de caking |

De plus, les pièces ainsi obtenues par laser sintering avec les poudres des Exemples 1.1 à 1.3 ont des propriétés mécaniques (notamment de module et d'allongement à la rupture) comparables à celles du Comparatif 1.

Par ailleurs, la polymérisation par voie anionique, avantageusement utilisée dans le procédé de l'invention, permet de limiter la quantité de monomères résiduels dans la poudre finale, qui sont susceptibles de se condenser sur les composants de la machine d'agglomération de poudres par fusion. La précision des articles 3D reste donc optimale et inchangée même après plusieurs cycles de fabrication.

### Exemple 4

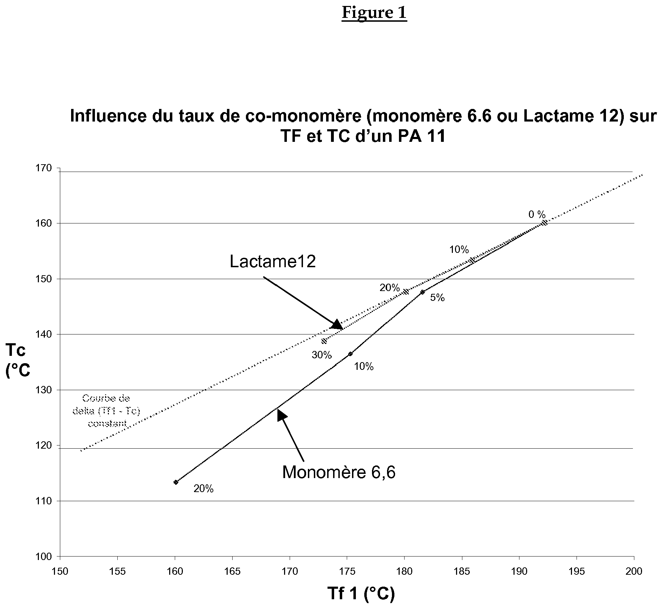

Le graphe de la Figure 1 illustre l'impact du taux de comonomère (ici lactame 12 ou monomère 6.6) dans un polyamide 11 (PA 11) sur l'évolution de l'écart entre Tf et Tc. Le graphe montre que c'est le comonomère 6.6 qui permet d'élargir le plus la fenêtre (Tf - Tc) pour des teneurs comprises entre 5 et 20 %.

### Exemple 5

Une poudre de CoPA 11/6.6 (7% de 6.6) est synthétisée à partir de granulés issus de polymérisation hydrolytique qui sont réduits en poudre par cryobroyage. La poudre obtenue a une viscosité relative égale à 1 (20°C, en solution à 0,5% massique dans le métacrésol).
Cette poudre est comparée à :
- une poudre de PA 12 obtenue par voie anionique. La poudre de PA 12 a une viscosité relative égale à 1,3 (20°C, en solution à 0,5% massique dans le métacrésol).
- une poudre de PA 11 synthétisée par broyage d'un prépolymère obtenu par polycondensation de l'acide amino-11-undécanoïque, puis traitement à l'eau et remontée en viscosité. La poudre de PA 11 a une viscosité relative égale à 1,35 (20°C, en solution à 0,5% massique dans le métacrésol).

L'analyse DSC des trois poudres montre les caractéristiques de Tf1 (première chauffe), Tf2 (deuxième chauffe), et Tc rassemblées dans le Tableau 3 suivant.

**TABLEAU 3**

| CoPA 11/6.6 Exemple 4 | PA 12 | PA 11 |
|---|---|---|
| Tf1 (1ère chauffe) / Tc / Tf2 (2ème chauffe) Delta Tf1- TC (°C) | Tf1 (1ère chauffe) / Tc / Tf2 (2ème chauffe) Delta Tf1- TC (°C) | Tf1 (1ère chauffe) / Tc / Tf2 (2ème chauffe) Delta Tf1- TC (°C) |
| **178/129/170 49** | **185/140/178 45** | **203/156/189 47** |

Les trois poudres sont testées en machine Laser Sintering:
Grâce à son écart de Tf-Tc égal à 49°C, la fenêtre de transformation de la poudre CoPA 11/6.6 en machine est de 14°C, ce qui permet d'utiliser la machine SLS dans de bonnes conditions.
De plus, on observe très peu ou pas de phénomène de caking avec la poudre de CoPA 11/6.6 de l'invention.

Les propriétés mécaniques des pièces fabriquées par Laser Sintering en CoPA 11/6.6 sont comparées à celles fabriquées en PA 12 et PA 11 dans le Tableau 4 suivant.

**TABLEAU 4**

| Normes | Essais Mécaniques | | PA 12 | CoPA 11/6,6 Exemple 4 | PA 11 |
|---|---|---|---|---|---|
| ASTM D 638:91-1 | Allongement rupture | % | 22,3 | 29,7 | 45 |
| | Module de traction | Mpa | 1739 | 1786 | 1797 |

Les pièces fabriquées en CoPA 11/6.6 ont un module de 1786 MPa, proche de ceux du PA 12 et du PA 11 et un allongement à la rupture compris dans la gamme 25-30%. L'allongement à la rupture du CoPA 11/6.6 se situe entre celui du polyamide 12 et celui du polyamide 11.

### Exemple 6

Les valeurs de DSC suivant la norme ISO 11357 sont comparées (Tableau 5) entre un PA 12 (Comparatif) et un polyamide 12 modifié avec respectivement 6% et 12% en poids d'acide amino 11-undécanoïque (exemples suivant l'invention).

**TABLEAU 5**

| | Méthode Ato | **DSC Norme ISO 11357-3** | | | **Tf1-Tc** |
|---|---|---|---|---|---|
| **Compositions** | Viscosité relative | 1^{ère} chauffe Tf1(°C) | 2^{éme} chauffe Tf2 (°C) | Refroidissement Tc (°C) | |
| **PA 12** (Comparatif) | 1,63 | 177 | 177,1 | 136,1 | **40,9** |
| **CoPA 12/11(6%)** (selon l'invention) Lauryllactame (94%) / acide amino 11-undécanoïque (6%) | 1,69 | 175,2 | 174 | 133,2 | **42** |
| **CoPA 12/11(12%)** (selon l'invention) Lauryllactame (88%) / acide amino 11-undécanoïque (12%) | 1,62 | 170,8 | 170,3 | 127,7 | **43,1** |

On constate une diminution de la température de cristallisation de 3 à 8°C et une augmentation de l'écart Tf1-Tc pour les deux PA 12 modifiés selon le procédé de l'invention comparativement à l'homopolyamide PA 12.

### Exemple 7

Les valeurs de DSC suivant la norme ISO 11357 sont comparées (dans le Tableau 6) entre un PA 11 (Comparatif) et un polyamide 11 modifié avec respectivement 1% et 5% en poids de N-heptylaminoacide (exemples selon l'invention).

**TABLEAU 6**

| **Compositions** | Mn Masse moléculaire moyenne en nombre | Viscosité relative (méthode Ato) | **DSC Norme ISO 11357** | | | **Tf1-Tc** |
|---|---|---|---|---|---|---|
| | | | 1^{ère} chauffe Tf1 | 2^{éme} chauffe Tf2 | Refroidissement Tc | |
| **PA 11** (Comparatif) | 23000 | 1,45 | P: 192 | P: 189.7 | **P: 157.6** | **34,4** |
| | | | D: 47.3 | D: 59.2 | D: -55.6 | |
| **PA11+5%N-heptylaminoacide** | 20000 | 1,32 | P: 189 | P: 188.1 | **P: 151.9** | **37,1** |
| (selon l'invention) | | | D: 52.1 | D: 55.7 | D: -51.8 | |
| **PA 11 + 1 % N-heptylaminoacide** | 23000 | 1,48 | P: 192.7 | P: 191.7 | **P: 152.6** | **40,1** |
| (selon l'invention) | | | D: 46.6 | D: 51 | D: -55.8 | |

| | | | | | | |
|---|---|---|---|---|---|---|
| P: Pour Tf1,Tf2, Tc, la mesure correspond au pic "P" (°C) D: correspond à l'enthalpie DH (J/g) | | | | | | |

On constate une diminution de la température de cristallisation de 5 à 6°C pour les deux PA 11 modifiés selon le procédé de l'invention comparativement à l'homopolyamide PA 11.

Concernant la quantité de comonomère minoritaire utilisée, on remarque que l'écart Tf1-Tc est plus grand avec 1% de N-heptylaminoacide qu'avec 5% de N-heptylaminoacide.

## Revendications

1. Utilisation, dans un procédé de polymérisation d'au moins un monomère majoritaire, d'au moins un co-monomère minoritaire pour diminuer la température de cristallisation et la température de fusion d'un polyamide issu de la polymérisation dudit au moins un monomère majoritaire, et pour que la diminution de la température de cristallisation soit supérieure à la diminution de la température de fusion respectivement par rapport à la température de cristallisation et à la température de fusion du polyamide issu de la polymérisation dudit au moins un monomère majoritaire, lesdites températures de fusion et de cristallisation étant mesurées par DSC selon la norme ISO 11357-3, ledit au moins un co-monomère minoritaire étant polymérisé selon le même processus de polymérisation que ledit au moins un monomère majoritaire et, ledit au moins un co-monomère minoritaire étant choisi parmi les acides aminocarboxyliques, les couples diamine.diacide, les lactames et/ou les lactones, et ledit au moins un co-monomère minoritaire représentant de 0.1% à 20% en masse du mélange total desdits monomère(s) et co-monomère(s), de préférence de 0.5% à 15% en masse dudit mélange total, de préférence de 1% à 10% en masse dudit mélange total, ledit au moins un monomère majoritaire comprenant de l'acide amino-11-undécanoique et/ou du lactame 12 et/ou le couple décanediamine.acide sébacique (10.10).

2. Utilisation selon la revendication 1, dans laquelle la polymérisation entre les différents monomères minoritaire(s) et majoritaire(s) est une polymérisation anionique.

3. Utilisation selon la revendication 1, dans lequel la polymérisation entre les différents monomères minoritaire(s) et majoritaire(s) est une polycondensation hydrolytique.

4. Utilisation selon l'une quelconque des revendications précédentes, dans laquelle ledit au moins un co-monomère minoritaire est choisi parmi les acides aminocarboxyliques, de préférence alpha,oméga-aminocarboxyliques, comprenant de 4 à 18 atomes de carbone, les couples diamine.diacide comprenant de 4 à 18 atomes de carbone, les lactames comprenant de 3 à 18 atomes de carbone, les lactones comprenant de 3 à 18 atomes de carbone et leurs mélanges.

5. Utilisation selon l'une quelconque des revendications précédentes, dans lequel ledit au moins un co-monomère minoritaire comprend de l'acide amino-11-undécanoique, de l'acide n-heptyl amino-11-undécanoïque, du lauryllactame, du caprolactame et/ou de la caprolactone.

6. Utilisation selon l'une quelconque des revendications précédentes, dans laquelle ledit au moins un comonomère minoritaire comprend l'un au moins des couples diamine.diacide suivants : 6.6, 6.10, 6.11, 6.12, 6.14, 6.18, 10.10, 10.12, 10.14, 10.18 et/ou 10.T, T étant l'acide téréphtalique.

7. Utilisation selon l'une quelconque des revendications précédentes, ledit au moins un co-monomère minoritaire comprenant de l'acide amino-11-undécanoique et/ou du lauryllactame et/ou du caprolactame et/ou de la caprolactone et/ou l'un au moins des couples diamine.diacide suivants : 6.6, 6.10, 6.11, 6.12, 6.14, 6.18, 10.10, 10.12, 10.14, 10.18 et/ou 10.T, T étant l'acide téréphtalique, ledit au moins un co-monomère minoritaire représentant de 1% à 7% en masse du mélange total desdits monomère(s) et co-monomère(s), de préférence de 1% à 5% en masse dudit mélange total, et ledit au moins un monomère majoritaire comprenant de l'acide amino-11-undécanoique et/ou du lactame 12 et/ou le couple décanediamine.acide sébacique (10.10).

8. Utilisation selon la revendication 7, dans lequel la polymérisation entre les différents monomères minoritaire(s) et majoritaire(s) est une polymérisation anionique.

9. Utilisation selon la revendication 7, dans lequel la polymérisation entre les différents monomères minoritaire(s) et majoritaire(s) est une polycondensation hydrolytique.

10. Utilisation selon l'une quelconque des revendications précédentes, comprenant en outre, après ladite étape de polymérisation, au moins une étape choisie parmi : dissolution, précipitation, extrusion, atomisation, pulvérisation, spray cooling, spray drying, broyage, broyage cryogénique, tamisage, remontée en viscosité et leurs combinaisons.

## Patentansprüche

1. Verwendung, in einem Verfahren zur Polymerisation wenigstens eines Hauptmonomers, wenigstens eines Neben-Co-Monomers zur Verringerung der Kristallisationstemperatur und der Schmelztemperatur eines Polyamids, das aus der Polymerisation besagten wenigstens einen Hauptmonomers entstanden ist, und damit die Verringerung der Kristallisationstemperatur höher ist als die Verringerung der Schmelztemperatur jeweils bezogen auf die Kristallisationstemperatur und auf die Schmelztemperatur des Polyamids, das aus der Polymerisation besagten wenigstens einen Hauptmonomers entstanden ist, wobei die Schmelz- und Kristallisationstemperatur mittels DSC nach der ISO-Norm 11357-3 gemessen werden, wobei besagtes wenigstens eine Neben-Co-Monomer nach demselben Polymerisationsprozess wie besagtes wenigstens eine Hauptmonomer polymerisiert wird, und wobei besagtes wenigstens eine Neben-Co-Monomer aus Aminocarboxylsäuren, Diamin-Diacid-Paaren, Lactamen und/oder Lactonen ausgewählt ist, und wobei besagtes wenigstens eine Neben-Co-Monomer 0,1 Gew.-% bis 20 Gew.-% der Gesamtmischung besagten Monomers und Co-Monomers oder besagter Monomere und Co-Monomere, vorzugsweise 0,5 Gew.-% bis 15 Gew.-% besagter Gesamtmischung, vorzugsweise 1 Gew.-% bis 10 Gew.-% besagter Gesamtmischung umfasst, wobei besagtes wenigstens eine Hauptmonomer 11-Aminoundecansäure und/oder Lactam 12 und/oder das Decandiamin-Sebacinsäure- (10-10)-Paar umfasst.

2. Verwendung gemäß Anspruch 1, wobei die Polymerisation des oder der verschiedenen Neben- und Hauptmonomere eine anionische Polymerisation ist.

3. Verwendung gemäß Anspruch 1, wobei die Polymerisation des oder der verschiedenen Neben- und Hauptmonomere eine hydrolytische Polymerisation ist.

4. Verwendung gemäß einem der vorhergehenden Ansprüche, wobei besagtes wenigstens eine Neben-Co-Monomer aus Aminocarboxylsäuren, vorzugsweise alpha-, omega-Aminocarboxylsäuren, umfassend 4 bis 18 Kohlenstoffatome, Diamin-Diacid-Paaren, umfassend 4 bis 18 Kohlenstoffatome, Lactamen, umfassend 3 bis 18 Kohlenstoffatome, Lactonen, umfassend 3 bis 18 Kohlenstoffatome, und Gemischen davon ausgewählt ist.

5. Verwendung gemäß einem der vorhergehenden Ansprüche, wobei besagtes wenigstens eine Neben-Co-Monomer 11-Aminoundecansäure, 11-n-Heptylaminoundecansäure, Lauryllactam, Caprolactam und/oder Caprolacton umfasst.

6. Verwendung gemäß einem der vorhergehenden Ansprüche, wobei besagtes wenigstens eine Neben-Co-Monomer wenigstens eines der folgenden Diamin-Diacid-Paare umfasst: 6-6, 6-10, 6-11, 6-12, 6-14, 6-18, 10-10, 10-12, 10-14, 10-18 und/oder 10-T, wobei T für Terephthalsäure steht.

7. Verwendung gemäß einem der vorhergehenden Ansprüche, wobei besagtes wenigstens eine Neben-Co-Monomer wenigstens 11-Aminoundecansäure und/oder Lauryllactam und/oder Caprolactam und/oder Caprolacton und/oder eines der folgenden Diamin-Diacid-Paare umfasst: 6-6, 6-10, 6-11, 6-12, 6-14, 6-18, 10-10, 10-12, 10-14, 10-18 und/oder 10-T, wobei T für Terephthalsäure steht, wobei besagtes wenigstens eine Neben-Co-Monomer 1 Gew.-% bis 7 Gew.-% der Gesamtmischung besagten Neben-Co-Monomers oder besagter Neben-Co-Monomere, vorzugsweise 1 Gew.-% bis 5 Gew.-% besagter Gesamtmischung umfasst, und wobei besagtes wenigstens eine Hauptmonomer 11-Aminoundecansäure und/oder Lactam 12 und/oder das Decandiamin-Sebacinsäure-(10-10)-Paar umfasst.

8. Verwendung gemäß Anspruch 7, wobei die Polymerisation des oder der verschiedenen Neben- und Hauptmonomere eine anionische Polymerisation ist.

9. Verwendung gemäß Anspruch 7, wobei die Polymerisation des oder der verschiedenen Neben- und Hauptmonomere eine hydrolytische Polymerisation ist.

10. Verwendung gemäß einem der vorhergehenden Ansprüche, umfassend außerdem nach besagtem Polymerisationsschritt wenigstens einen Schritt, ausgewählt aus: Lösen, Fällen, Extrusion, Zerstäubung, Pulverisierung, Sprühkühlen, Sprühtrocknen, Zerkleinerung, kryogener Zerkleinerung, Sieben, Viskositätserhöhung und Kombinationen davon.

## Claims

1. The use of at least one minor comonomer in a process for polymerizing at least one major monomer in order to reduce the crystallization temperature and the melting temperature of a polyamide resulting from the polymerization of said at least one major monomer, and in order for the decrease in crystallization temperature to be greater than the decrease in melting temperature, respectively, relative to the crystallization temperature and the melting temperature of the polyamide resulting from the polymerization of said at least one major monomer, said melting and crystallization temperatures being measured by DSC according to standard ISO 11357-3, said at least one minor comonomer being polymerized according to the same polymerization process as said at least one major monomer, and said at least one minor comonomer being chosen from aminocarboxylic acids, diamine-diacid couples, lactams and/or lactones, and said at least one minor comonomer representing from 0.1% to 20% by mass of the total blend of said monomer(s) and comonomer(s), preferably from 0.5% to 15% by mass of said total blend, preferably from 1% to 10% by mass of said total blend, in which said at least one major monomer comprises 11-aminoundecanoic acid and/or lactam 12 and/or the decanediamine-sebacic acid (10.10)couple.

2. The use as claimed in claim 1, in which the polymerization between the various minor and major monomers is an anionic polymerization.

3. The use as claimed in claim 1, in which the polymerization between the various minor and major monomers is a hydrolytic polycondensation.

4. The use as claimed in any one of the preceding claims, in which said at least one minor comonomer is chosen from aminocarboxylic acids, preferably α, ω-aminocarboxylic acids, comprising from 4 to 18 carbon atoms, diamine-diacid couples comprising from 4 to 18 carbon atoms, lactams comprising from 3 to 18 carbon atoms, lactones comprising from 3 to 18 carbon atoms, and mixtures thereof.

5. The use as claimed in any one of the preceding claims, in which said at least one minor comonomer comprises 11-aminoundecanoic acid, 11-n-heptylamino-undecanoic acid, lauryllactam, caprolactam and/or caprolactone.

6. The use as claimed in any one of the preceding claims, in which said at least one minor comonomer comprises at least one of the following diamine-diacid couples: 6.6, 6.10, 6.11, 6.12, 6.14, 6.18, 10.10, 10.12, 10.14, 10.18 and/or 10.T, T being terephthalic acid.

7. The use as claimed in any one of the preceding claims, in which said at least one minor comonomer comprising 11-aminoundecanoic acid and/or lauryllactam and/or caprolactam and/or caprolactone and/or at least one of the following diamine-diacid couples: 6.6, 6.10, 6.11, 6.12, 6.14, 6.18, 10.10, 10.12, 10.14, 10.18 and/or 10.T, T being terephthalic acid, said at least one minor comonomer representing from 1% to 7% by mass of the total blend of said monomer(s) and comonomer(s), preferably 1% to 5% by mass of said total blend, in which said at least one major monomer comprises 11-aminoundecanoic acid and/or lactam 12 and/or the decanediamine-sebacic acid (10.10) couple.

8. The process as claimed in claim 7, in which the polymerization between the various minor and major monomers is an anionic polymerization.

9. The process as claimed in claim 7, in which the polymerization between the various minor and major monomers is a hydrolytic polycondensation.

10. The use as claimed in any one of the preceding claims, also comprising, after said polymerization step, at least one step chosen from: dissolution, precipitation, extrusion, atomization, spraying, spray cooling, spray drying, milling, cryogenic milling, screening, viscosity raising, and combinations thereof.
